# EUROPEAN PATENT APPLICATION

(11) **EP 2 878 890 A1**
(43) Date of publication of application: **03.06.2015**
(21) Application number: 14461531.7
(22) Date of filing: 15.05.2014
(51) Int. Cl.: F23K 3/00, B65G 53/46, B65G 65/48

(54) **Pellet feeder for a hot water heating boiler**

(30) Priority: 15.05.2013 PL 12204913 U
(71) Applicant: NEBIOLO Polska Sp. z o.o., 25-663 Kielce (PL)
(72) Inventor: Canavero, Gianluca, 10121 Torino (IT)
(74) Representative: Garstka, Antoni Czeslaw

(57) **Abstract**

Pellet feeder for a hot water heating boiler is characterized by that in its feeding chamber (9) it has the insert (1) having two rows of trays (16) separated by a centrally located divider (13), made of walls (12) planted diagonally on a roller (3) and convergent towards one another (3) at an angle from 45 to 95 degrees, preferably 80 degrees. Rows of trays (16) are dephased in relation to the neighbouring row by the angle of 20 to 50 degrees, preferably 30 degrees. The insert (1) is longer than the width of the opening (15) of the feeding chamber (9) and it is located centrally in relation to it. The opening (15) of the feeding chamber (9) has a cutting edge (14) on its width, joint with the lower edge of the feed hopper (2), situated favourably in the vertical plane passing through the driving shaft axis (3).

## Description

The subject of the invention. is a pellet feeder for a hot water heating boiler.

Known from the Austrian invention description AT511219, the pellet feeder consists of a cylindrical insert powered with an electric motor with a motor-reducer assembly. The insert contains a cell filled with the measured portion of pellets and emptied at its rotation by 360° to the chute of the screw conveyor feeding the boiler.

From the German invention description DE 10149375 fuel feeder is known which has a dosing element in the form of a rotary roller with two symmetrical feeding cells which are fed with fuel from the top and are emptied to the chute from the bottom. Dosing fuel is made with roller turning by 180°.

A feeder is also known from the applied invention description PL387251 which has at least two symmetrical oblong blades fixed to the driving shaft. The feeder has the hopper outlet on its perimeter and the outlet to the chute on the opposite side. Favourably, the blades are oblong and their convex side faces the direction of blades rotation. The driving shaft with the blades is situated crosswise to the direction of fuel migration.

The essence of the invention is the structure of the pellet feeder equipped with a cylindrical dosing system powered with a shaft though the motor-reducer assembly, and the feed hopper combined with a cylindrical feeding chamber and then with a chute which in the feeding chamber has two rows of trays separated with a radial divider located centrally. Trays are made of walls planted diagonally on a roller at an angle from 45 to 95 degrees, preferably 80 degrees for the said divider, convergent towards one another and dephased in relation to the neighbouring row at an angle from 45 to 95 degrees, preferably 30 degrees. The insert is closely fitted to the internal diameter of the feeding chamber, is longer than the width of the opening of the feeding chamber and it is located centrally in relation to it. The opening of the feeding chamber has a cutting edge on its width, joint with the lower edge of the feed hopper.

It is a favourable solution when the cutting edge is situated in the vertical plane passing through the driving shaft.

According to the invention, the solution ensures the decrease of the needed power of the motor-reducer assembly in connection with the reduced use of energy on cutting pellets on the cutting edge. By dividing the insert into two rows, dephasing them and using sloping walls, the force needed for cutting is decreased what undoubtedly influences the decrease of the cutting energy and, what follows that, the cost of the feeder itself. Moreover, the applied convergence of walls to the inside of the insert allows for decreasing the drain opening of the chute.

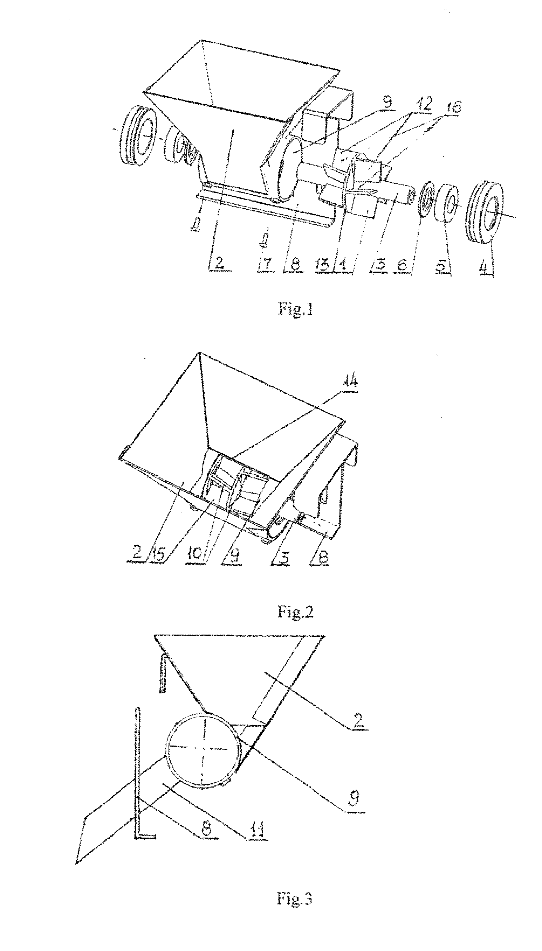

The subject of the invention is presented as the embodiment in the drawing in which fig. 1 presents the general view of the feeder with the insert dismantled into parts, fig. 2 - the general view of the feeder from the top, and fig. 3 - the view of the feeder from the side, with emptied feeding chamber.

The feeder is mounted on the body 8, through the chute welded to it 11. From the top the feeder has the feed hopper 2 connected from the bottom with the feeding chamber 9 which is connected with the chute 11 at the outlet. The drain opening of the chute 11 is smaller from the width of insert 1. The feeding chamber 9 has a cylindrical shape and its axis is perpendicular to the direction of the stream of the pellets poured in it. Inside the feeding chamber 9, insert 1 is installed, made on the shaft 3 of walls 12 planted diagonally on it in two rows, creating trays 16, separated centrally with a divider 13. Walls 12 are planted at an angle of 80 degrees in relation to the divider 13 dividing the rows of trays 16 and are convergent to the centre of the insert 1. Rows of trays 16 are moved towards one another by an angle of 30 degrees. Insert 1 is closely fitted to the inside diameter of the feeding chamber 9, it is longer from the width of the feeding opening 15 and it is situated centrally in relation to it. Insert 1 is planted on the shaft 3 which is mounted on a bearing 5 on both sides planted in casings 4 and separated from the walls 12 with separating washers 6.

Bearing 5 casings 4 are fixed in the feeding chamber 9 housing with screws. The opening 15 of the feeding chamber 9 has a cutting edge 14 on its width, joint with the lower edge of the feed hopper 2. The cutting edge 14 is situated in the vertical plane passing through the shaft axis 3.

## Claims

1. The pellet feeder for a hot water heating boiler, consisting of the dosing insert powered with a shaft through a motor-reducer assembly, the feed hopper connected with the cylindrical feeding chamber and then with the chute, is **characterised in that** in the feeding chamber (9) it has the insert (1) having two rows of trays (16), separated with the centrally located divider (13), made of walls (12) planted diagonally on the shaft (3) and convergent toward one another and dephased in relation to the neighbouring row, however the insert (1) is closely fitted to the inside diameter of the feeding chamber (9).

2. The feeder, according to claim 1, is **characterised in that** the walls (12) are planted diagonally on the shaft (3) at an angle from 45 to 95 degrees, preferably 80 degrees.

3. The feeder, according to claim 1, is **characterised in that** the angular dephasing of the walls (12) in relation to the neighbouring row amounts to 20 to 50 degrees, preferably 30 degrees.

4. The feeder, according to claim 1, is **characterised in that** the insert (1) is longer than the width of the opening (15) of the feeding chamber (9) and it is located centrally in relation to it.

5. The feeder, according to claim 1, is **characterised in that** the opening of the feeding chamber (9) has a cutting edge (14) on its width, joint with the lower edge of the feed hopper (2).

6. The feeder, according to claim 3, is **characterised in that** the cutting edge (14) is situated in the vertical plane passing through the shaft (3).
